# EUROPÄISCHE PATENTANMELDUNG

(11) **EP 4 797 528 A1**
(43) Veröffentlichungstag der Anmeldung: **26.08.2026**
(21) Anmeldenummer: 25159427.1
(22) Anmeldetag: 21.02.2025
(51) Int. Cl.: H02P 25/089

(54) **ERMITTLUNG VON ZUSTANDSGRÖSSEN EINER FLUIDSYSTEMKOMPONENTE MIT EINEM RELUKTANZMOTOR**

(71) Anmelder: Exner & Tottewitz Besitz GBR, 76275 Ettlingen (DE)
(72) Erfinder: EXNER, Detlef, 71297 Mönsheim (DE); TOTTEWITZ, Michael, 76646 Bruchsal (DE); ENGLICH, Florian Viktor, 76275 Ettlingen (DE); HANSELMANN, Timo, 91541 Rothenburg ob der Tauber (DE); CREMERS, Gabriel, 76359 Marxzell (DE); GÜNEY, Yasar, 76275 Ettlingen (DE); ULM, Jürgen, 74575 Schrozberg (DE); SEMIN, Vladimir, 74653 Künzelsau (DE)
(74) Vertreter: LBP Lemcke, Brommer & Partner Patentanwälte mbB

(57) **Zusammenfassung**

Verfahren zur Ermittlung von zumindest einer Zustandsgröße einer Fluidsystemkomponente (11), insbesondere eine Wechselarmatur oder eine Pumpe oder ein Ventil, mit einem Reluktanzmotor (1), welcher einen Rotor (3) und einen Stator (2) aufweist, mittels einer Auswerteeinheit (4), wobei der Stator (2) mehrere Statorzähne (5) aufweist, die jeweils von zumindest einer Strangwicklung (7) eines Strangs umwickelt sind und wobei der Rotor (3) mehrere Rotorzähne (6) aufweist,
die folgenden Verfahrensschritte umfassend:
A Inbetriebnehmen des Reluktanzmotors (1);
B Messen zumindest einer Stromstärke *I* und/oder Ermitteln zumindest einer induzierten Spannung *U*_{L} der Strangwicklung und/oder einer davon abgeleiteten Größe, sowie Erstellen eines ersten Datensatzes mit zumindest einem Werte-Tupel, bevorzugt einer Mehrzahl an Werte-Tupeln, welche zumindest die Stromstärke *I* und/oder die induzierte Spannung *U*_{L} und/oder eine davon abgeleitete Größe umfassen;
C Berechnen zumindest einer Zustandsgröße mittels der Auswerteeinheit (4) anhand des ersten Datensatzes und anhand eines zweiten Datensatzes, wobei der zweite Datensatz eine Mehrzahl an Werte-Tupeln aufweist, welche zumindest eine Stromstärke *I* und/oder zumindest eine induzierte Spannung *U*_{L} der Strangwicklung und/oder eine davon abgeleitete Größe umfassen.

## Beschreibung

Die Erfindung betrifft ein Verfahren zur Ermittlung zumindest einer Zustandsgröße einer Fluidsystemkomponente mit einem Reluktanzmotor gemäß Anspruch 1 sowie eine Fluidsystemkomponente mit einem Reluktanzmotor nach Anspruch 15.

Ein Fluidsystem umfasst zumindest eine Komponente zum Transportieren, Mischen oder Lagern eines Fluids. In einer einfachen Ausführung kann es sich um eine Rohrleitung handeln. Komplexe Fluidsysteme werden beispielsweise in der Verfahrenstechnik eingesetzt, wobei die Fluidsysteme je nach Prozess weitere Komponenten aufweisen. Fluide werden dabei gemischt, es werden chemische Reaktionen durchgeführt und/oder Prozessgrößen gemessen. Dazu werden unterschiedliche Fluidsystemkomponenten eingesetzt, wie beispielsweise Pumpen, Ventile oder Armaturen. Ein Fluidsystem kann auch als hydraulische Schaltung ausgebildet sein, bei der Komponenten unter anderem zur Druckerzeugung oder Drucksteuerung eingesetzt werden.

Armaturen werden in Fluidsystemen hauptsächlich zur Steuerung, Regelung oder Absperrung von Fluidströmen in Fluidsystemen, wie einem Rohrleitungssystem, eingesetzt. Es gibt verschiedene Bauarten von Armaturen. Dazu zählen Wechselarmaturen, Absperrarmaturen, beispielsweise Kugelhähne oder Schieber, Regelarmaturen wie Regelventile, Sicherheitsarmaturen, beispielsweise Sicherheitsventile oder Rückflussverhinderer. Je nach Bauart erfüllt eine Armatur eine oder mehrere verfahrenstechnische Funktionen, wie Durchflusssteuerung oder - absperrung, Druckregulierung, Bestimmung einer Durchflussrichtung, Umleitung oder Verteilung eines Fluids. Weitere Armaturen, insbesondere Wechselarmaturen, werden zum Messen von Prozessgrößen genutzt. Mit Pumpen wird in einem Fluidsystem Druck erzeugt und mit Ventilen ein Fluidfluss gesteuert.

Zur Verstellung von Fluidsystemkomponenten ist eine Kraft erforderlich, beispielsweise zum Verfahren einer Wechselarmatur zwischen einer Ruheposition und einer Messposition. Aus DE102012200438A1 ist eine Wechselarmatur bekannt, welche dazu einen pneumatischen Antrieb nutzt. Die dafür notwendige Versorgung einer Wechselarmatur mit Druckluft kann jedoch nicht in Umgebungen mit eingeschränktem Zugang zu Druckluft geleistet werden und ist obendrein energieineffizient. Neuere Entwicklungen setzen daher auf Armaturen mit elektrischem Antrieb, insbesondere mit einem Reluktanzmotor als elektrischem Antrieb.

Ein Reluktanzmotor ist ein Elektromotor, der eine Reluktanzkraft nutzt, um ein Drehmoment zu erzeugen. Reluktanzmotoren werden üblicherweise in elektrisch angetriebenen Maschinen mittlerer Größe eingesetzt, beispielsweise in Kraftfahrzeugen, Waschmaschinen oder Pumpen.

Eine Reluktanzkraft entsteht, wenn ein magnetisch wirksames System mit einem Magnetfeld beaufschlagt wird, indem das System nach dem Zustand minimalen magnetischen Widerstands strebt und sich entsprechend anordnet oder verformt. Hinsichtlich magnetischer Wandler mit statischen und beweglichen Elementen entspricht das einer Verkleinerung eines Arbeitsluftspalts. Bei einem Reluktanzmotor ist typischerweise ein Rotor gegenüber einem Stator drehbar gelagert, wobei der Stator den Rotor entlang seiner Drehachse umschließt. Sowohl der Stator als auch der Rotor sind typischerweise mit Ausbuchtungen versehen - den Statorzähnen bzw. Rotorzähnen. Mehrere Statorzähne sind üblicherweise von zumindest einer Strangwicklung umwickelt, die bei Bestromung als Spule wirkt und ein zur Drehachse des Rotors gerichtetes Magnetfeld erzeugt. Der Rotor ist üblicherweise ferromagnetisch. Steht ein Rotorzahn nicht dem bestromten Statorzahn gegenüber, dann bewirkt das Magnetfeld eine Reluktanzkraft des Rotors. Diese wirkt derart, dass der dem bestromten Statorzahn nächstgelegene Rotorzahn in Richtung des bestromten Statorzahn bewegt wird. Stehen sich Rotorzahn und Statorzahn gegenüber, dann wirkt das Magnetfeld bremsend auf den Rotor. Daher wird die Strangwicklung um den Statorzahn abgeschaltet und eine Wicklung um einen anderen Statorzahn bestromt, falls der Rotor weiterhin bewegt werden soll. Sukzessive werden so alle Strangwicklungen bestromt und wieder abgeschaltet, um ein Drehfeld zu erzeugen, das den Rotor gegenüber dem Stator in Rotation versetzt.

Der Zeitpunkt zum Schalten des Reluktanzmotors hängt von der Rotorposition ab. Zur Ermittlung der Rotorposition wird nach dem Stand der Technik ein Rotorlagegeber verwendet. Mit diesem können auch unerwünschte Zustände des Motors identifiziert werden, wie Außer-Tritt-Fallen oder Blockierung. Häufig werden auch weitere Zustandsgrößen, beispielsweise Drehrichtung und Drehzahl, mit zusätzlichen Mitteln wie dem Rotorlagegeber ermittelt. Weitere nützliche Größen zum Betrieb des Motors wie das Drehmoment müssen mit weiteren Sensoren ermittelt werden.

Ebenso sind beispielsweise aus Jürgen Ulm: "Kommutatormaschinen und geschaltete Reluktanzmaschinen", ISBN 978-3-8252-5352-3, theoretische Grundlagen zur Ermittlung eines Drehmoments eines Reluktanzmotors bekannt. Dazu wird eine Kennlinie *Ψ(I)* herangezogen, durch welche ein Zusammenhang zwischen einer Stromstärke *I* im Strang und eines verketteten magnetischen Flusses *Ψ* dargestellt wird. Diese Kennlinie ist eine Hysterese-Kurve, sodass für einen Wert der Stromstärke *I* im Allgemeinen mehrere Werte des verketteten magnetischen Flusses *Ψ* vorliegen.

Der Erfindung liegt die Aufgabe zugrunde, eine Ermittlung von Zustandsgrößen einer Fluidsystemkomponente mit einem Reluktanzmotors zu ermöglichen.

Erfindungsgemäß wird diese Aufgabe durch ein Verfahren zur Ermittlung von zumindest einer Zustandsgröße einer Fluidsystemkomponente mit einem Reluktanzmotor gemäß Anspruch 1 und durch Fluidsystemkomponente mit einem Reluktanzmotor gemäß Anspruch 15 gelöst.

Vorteilhafte Ausführungen des erfindungsgemäßen Verfahrens finden sich in den Ansprüchen 2 bis 14. Der Wortlaut sämtlicher Ansprüche wird hiermit der Referenz in die Beschreibung einbezogen.

Das erfindungsgemäße Verfahren zur Ermittlung von zumindest einer Zustandsgröße einer Fluidsystemkomponente, insbesondere eine Wechselarmatur oder eine Pumpe oder ein Ventil, mit einem Reluktanzmotor, welcher einen Rotor und einen Stator aufweist, mittels einer Auswerteeinheit, wobei der Stator mehrere Statorzähne aufweist, die jeweils von zumindest einer Strangwicklung umwickelt sind und wobei der Rotor mehrere Rotorzähne aufweist,
umfasst die folgenden Verfahrensschritte:
A Inbetriebnehmen des Reluktanzmotors;
B Messen zumindest einer Stromstärke *I* und/oder Ermitteln zumindest einer induzierten Spannung *U*_{L} der Strangwicklung und/oder einer davon abgeleiteten Größe, sowie Erstellen eines ersten Datensatzes mit zumindest einem Werte-Tupel, bevorzugt einer Mehrzahl an Werte-Tupeln, welche zumindest die Stromstärke *I* und/oder die induzierte Spannung *U*_{L} und/oder eine davon abgeleitete Größe umfassen;
C Berechnen zumindest einer Zustandsgröße mittels der Auswerteeinheit anhand des ersten Datensatzes und anhand eines zweiten Datensatzes, wobei der zweite Datensatz eine Mehrzahl an Werte-Tupeln aufweist, welche zumindest eine Stromstärke *I* und/oder zumindest eine induzierte Spannung *U*_{L} der Strangwicklung und/oder eine davon abgeleitete Größe umfassen.

Bevorzugt handelt es sich bei der Fluidsystemkomponente um eine Wechselarmatur. Eine Wechselarmatur wird üblicherweise an ein Fluidsystem angeflanscht und weist eine Messlanze auf, die mittels eines Antriebs ein- und ausfahrbar ist. Als Antrieb für die Messlanze wird ein Reluktanzmotor eingesetzt. Das erfindungsgemäße Verfahren ist vorteilhaft, da weitere Zustandsgrößen ermittelbar sind und eine Sensorik der Wechselarmatur vereinfacht werden.

In einer weiteren bevorzugten Ausführungsform ist die Fluidsystemkomponente als eine Wechselarmatur mit einem Reluktanzmotor ausgebildet, wobei der Rotor des Reluktanzmotors eine Ausnehmung aufweist. Die Wechselarmatur umfasst eine Messlanze, welche entlang einer Verschiebeachse verfahrbar ist. Aufgrund der Verwendung eines Rotors mit einer Ausnehmung, durch welche die Verschiebeachse verläuft, ergibt sich der Vorteil, dass durch das Anordnen der Verschiebeachse in der Ausnehmung des Rotors eine kompakte Bauweise erreicht wird. Dies ermöglicht eine effiziente Nutzung des verfügbaren Raums und trägt dazu bei, dass die Wechselarmatur in verschiedenen Umgebungen flexibel eingesetzt werden kann, auch in begrenzten räumlichen Verhältnissen.

Vorteilhafterweise ist der Reluktanzmotor der Wechselarmatur als Hohlwellenmotor ausgebildet und die Verschiebeachse verläuft innerhalb der Hohlwelle des Hohlwellenmotors. Insbesondere ist bevorzugt die Messlanze verschiebbar in der Hohlwelle des Hohlwellenmotors angeordnet, wobei bevorzugt die Verschiebeachse der Messlanze parallel zu einer Längsachse der Hohlwelle des Hohlwellenmotors angeordnet ist.

In einer vorteilhaften Ausgestaltung steht der Rotor bevorzugt mittelbar über eine Getriebeeinrichtung der Wechselarmatur mit der Messlanze in Wirkverbindung, um die Verschiebung der Messlanze zu bewirken. Vorteilhafterweise weist die Wechselarmatur daher eine Getriebeeinrichtung auf, deren Antrieb mit dem Reluktanzmotor und deren Abtrieb mit der Messlanze in Wirkverbindung steht. Dies ermöglicht eine höhere Krafteinwirkung auf die Messlanze mittels des Reluktanzmotors im Vergleich mit einer Ausgestaltung ohne Getriebe. Insbesondere können hierdurch kompakte Reluktanzmotoren verwendet werden, deren Drehmoment ohne Verwendung eines Getriebes eine erforderliche Krafteinwirkung auf die Messlanze nicht ermöglichen würde. Die Getriebeeinrichtung kann ein oder mehrere Getriebe aufweisen.

Insbesondere ist es vorteilhaft, dass die Getriebeeinrichtung ein Zykloidgetriebe aufweist, um eine kompakte Bauform zu erzielen sowie aufgrund der nachfolgend genannten Vorteile.

Die Getriebeeinrichtung weist bevorzugt als Schraubgetriebe ausgebildet, bevorzugt mit einem Spindeltrieb und einer Gewindespindel, auf, um eine rotatorische Bewegung des Reluktanzmotors in eine lineare Bewegung der Messlanze umzuwandeln. Hierdurch wird eine kompakte Bauform erzielt. Insbesondere ist es vorteilhaft, die Messlanze als Teil des Schraubgetriebes, insbesondere als Gewindespindel auszubilden.

Bei einer weiter bevorzugten Ausführungsform weist der Spindeltrieb der Getriebeeinrichtung eine Gewindespindel und eine Spindelmutter auf, wobei die Spindelmutter drehbar auf der Gewindespindel angeordnet ist und wobei der Reluktanzmotor mit der Spindelmutter wirkverbunden ist, um die Spindelmutter zu drehen. Insbesondere ist es hierbei vorteilhaft, die Messlanze als Gewindespindel auszubilden. Vorteilhaft ist hierbei die kompakte Bauweise, die bevorzugt durch die Ausbildung der Messlanze als Spindeltrieb, insbesondere als Gewindestange, erreicht wird.

Bei einer bevorzugten Ausführungsform weist die Wechselarmatur eine Getriebeeinrichtung mit einem Zykloidgetriebe und einem Spindeltrieb auf, wobei das Zykloidgetriebe zur Übertragung des durch den Reluktanzmotor aufgebrachten Drehmoments auf den Spindeltrieb ausgebildet ist. Vorteilhaft ist hierbei die kompakte Bauweise von Zykloidgetrieben, die eine effiziente Nutzung des verfügbaren Bauraums in der Wechselarmatur ermöglichen. Insbesondere ist hierbei es für eine kompakte Bauform vorteilhaft, die Messlanze als Gewindespindel auszubilden.

Vorteilhaft ist zudem, dass durch den Einsatz von Zykloidgetrieben der Wartungsaufwand verringert werden kann, da Zykloidgetriebe aufgrund ihrer Ausgestaltung weniger anfällig für Verschleiß sind.

Des Weiteren ergibt sich der Vorteil, dass auf kleinen Bauraum eine hohe Übersetzung erzielt wird, da Zykloidgetriebe durch ihre Bauweise ein großes Übersetzungsverhältnis in einem kleinen Bauraum ermöglichen.

Die Kombination aus Zykloidgetriebe und Spindeltrieb ermöglicht eine kompakte Bauform. Dies ist besonders vorteilhaft, um den zur Verfügung stehenden Bauraum effizient zu nutzen. Des weiteren weist der Spindeltrieb einen selbsthemmenden Charakter auf, welcher gewährleistet, dass die Messlanze stabil in der Ist-Position verweilt und nicht ungewollt verschoben wird.

Bei einer bevorzugten Ausführungsform weist das Zykloidgetriebe der Getriebeeinrichtung eine Ausnehmung auf und die Verschieberichtung der Messlanze verläuft durch diese Ausnehmung des Zykloidgetriebes. Insbesondere ist die Messlanze bevorzugt zumindest in der Ruheposition und/oder in der Messposition in der Ausnehmung des Zykloidgetriebes angeordnet. Bevorzugt wird die Messlanze während des Verschiebeweges zwischen Ruheposition und Messposition in der Ausnehmung des Zykloidgetriebes geführt. Hierdurch ergibt sich ein kompakter und robuster Aufbau.

Bevorzugt ist die Fluidsystemkomponente als Ventil ausgebildet. Ventile dienen bei Verwendung in einem Fluidsystem dazu, Fluidströme zu steuern, in diese beispielsweise gelenkt oder abgesperrt werden, oder werden verwendet, um einen Fluiddruck zu regulieren. Üblicherweise sind Ventile kontinuierlich oder diskret zwischen einer oder mehrerer Stellungen verstellbar. Zum Einnehmen einer Ventilstellung wird erfindungsgemäß ein Reluktanzmotor verwendet. Dadurch ergibt sich als Vorteil, dass ein Ventil über sensorische Funktionen verfügt und mittels des Ventils Zustandsgrößen ermittelbar sind.

Bevorzugt ist die Fluidsystemkomponente als Pumpe ausgebildet. In Fluidsystemen kommen Pumpen zum Einsatz um Druck zu erzeugen und somit ein Fluid zu treiben. Erfindungsgemäß weist die Pumpe einen Reluktanzmotor als Antrieb auf. Das Verfahren besitzt den Vorteil, dass eine Pumpe über sensorische Funktionen verfügt und mittels der Pumpe Zustandsgrößen ermittelbar sind.

Das erfindungsgemäße Verfahren ist anhand eines Reluktanzmotors mit einem Strang beschrieben. Der Reluktanzmotor umfasst einen Rotor und einen Stator, welche Rotorzähne bzw. Statorzähne aufweisen. Durch Bestromen des Strangs bilden Wicklungen des Strangs um die Statorzähne Magnetfelder aus, die zu einer Drehachse des Rotors gerichtet sind. Diese Strangwicklungen funktionieren daher als Spulen. Das Verfahren ist jedoch nicht auf Reluktanzmotoren mit nur einem Strang beschränkt, sondern erstreckt sich auch auf Ausführungen von Reluktanzmotoren, die mehrere Stränge aufweisen. Fortfolgend werden mehrere Strangwicklungen als Teil desselben Strangs betrachtet.

Mehrere Statorzähne sind zumindest einfach von dem zumindest einen Strang umwickelt. Es ist ebenfalls im Sinne der Erfindung, dass Statorzähne von mehreren Strängen umwickelt sind.

Der zumindest eine Strang ist ein elektrisches Leitsystem, das an eine Spannungsquelle angeschlossen ist und durch Wicklung um Statorzähne zumindest eine Spule ausbildet oder an zumindest eine Spule angeschlossen ist, die um einen Statorzahn herum angeordnet sind. Der Strang kann weitere Elemente wie Schalter umfassen. Erfindungsgemäß können auch mehrere Stränge an die Spannungsquelle angeschlossen sein.

Das Verfahren beruht auf der Messung von Spannung und Stromstärke des Strangs und/oder hiervon abgeleiteter Größen. In einem ersten Verfahrensschritt A wird der Reluktanzmotor in Betrieb genommen. Dabei wird der zumindest eine Strang im Wechsel elektrisch leitend mit der Spannungsquelle verbunden, beispielsweise mittels eines Schalters, und wieder von ihr getrennt. Dies wird fortfolgend als "bestromt" bzw. "unbestromt" bezeichnet und bezieht sich auf die leitende Verbindung mit der Spannungsquelle. Es ist im Sinne der Erfindung, dass auch im unbestromten Zustand zwecks Messung geringe Spannungen anliegen können. Werden mehrere Stränge verwendet, so werden sie im eingeschalteten Zustand des Reluktanzmotors wechselweise bestromt. Dahingegen verbleibt der Strang bzw. die Stränge im ausgeschalteten Zustand des Reluktanzmotors von der Spannungsquelle getrennt. Die Spannungsquelle liefert eine Spannung, die geeignet ist, dass der Reluktanzmotor im eingeschalteten Zustand eine Arbeitsleistung erzeugt.

Ein bewegter Rotor induziert selbst eine Spannung *U*_{L} im Motor, welche einer Spannung der Spannungsquelle entgegenwirkt. Insbesondere kann durch Messen der Gesamtspannung des Strangs die induzierte Spannung *U*_{L} ermittelt werden. In einem Verfahrensschritt B wird eine Stromstärke *I* des Strangs gemessen und/oder die induzierte Spannung *U*_{L} und/oder eine von der induzierten Spannung abgeleitete Größe ermittelt. Die abgeleitete Größe ist im Sinne der Erfindung eine Größe, die durch Messung der induzierten Spannung mit oder ohne Hinzunahme weiterer Größen abgeleitet werden kann. Bevorzugt handelt es sich bei der abgeleiteten Größe um einen verketteten magnetischen Fluss *Ψ*, welcher durch Integrieren der induzierten Spannung von dieser abgeleitet wird. Bevorzugt wird die Spannung *U*_{L} und/oder eine von der induzierten Spannung abgeleitete Größe mittels der Auswerteeinheit ermittelt. Die Auswerteeinheit weist einen Rechenprozessor und einen Datenspeicher auf und ist mit Mitteln zum Messen von Stromstärken und Spannungen in dem zumindest einen Strang signaltechnisch verbunden. Von der Stromstärke *I* und der induzierten Spannung *U*_{L} und/oder der davon abgeleiteten Größe wird zumindest ein Werte-Tupel, bevorzugt eine Mehrzahl von Werte-Tupeln, ermittelt, besonders bevorzugt mittels der Auswerteeinheit. Die Werte-Tupel besitzen eine Länge, die von der Anzahl der darin gespeicherten Größen abhängt. Insbesondere werden bevorzugt weitere Größen ermittelt, deren Werte in den Werte-Tupeln gespeichert werden, bevorzugt ein Zeitpunkt einer Messung. Mit den Werte-Tupeln wird ein erster Datensatz gebildet.

In einem Verfahrensschritt C wird die Zustandsgröße abhängig vom ersten Datensatz sowie abhängig von einem zweiten Datensatz mittels der Auswerteeinheit ermittelt. Dieser zweite Datensatz weist eine Mehrzahl an Werte-Tupeln auf, welche zumindest eine Stromstärke *I* und/oder zumindest eine induzierte Spannung *U*_{L} der Strangwicklung und/oder eine davon abgeleitete Größe umfassen. Bei der Zustandsgröße handelt es sich um eine Größe, welcher eine Information bezüglich eines regulären oder irregulären Zustands des Motors entnommen werden kann. Davon sind im Sinne der Erfindung Zustände umfasst, die aktuell vorliegen oder die in der Vergangenheit liegen.

Bevorzugt handelt es sich bei dem Reluktanzmotor um einen geschalteten Reluktanzmotor.

Das erfindungsgemäße Verfahren bietet den Vorteil, dass mit geringem Aufwand eine Zustandsgröße der Fluidsystemkomponente ermittelt wird. Diese Zustandsgröße kann genutzt werden, um Zustandsinformationen der Fluidsystemkomponente zu erhalten, wodurch der Bedarf an Sensoren geringer ist und die Fluidsystemkomponente somit einfacher und kostengünstiger hergestellt werden kann.

In einer vorteilhaften Ausführungsform des erfindungsgemäßen Verfahrens wird anhand des ersten Datensatzes eine erste Kennlinie *Ψ(I)* ermittelt und anhand des zweiten Datensatz es eine zweite Kennlinie *Ψ(I)* ermittelt. Eine Kennlinie ist dabei eine Schar von Werte-Tupeln, die geordnet nach einer Größe in den Werte-Tupeln angeordnet sind. Daten des ersten Datensatzes entstammen bevorzugt Werten, die während einer Rotorperiode in Verfahrensschritt B aufgenommen oder ermittelt werden. Anfang und Ende einer Rotorperiode sind durch eine Rotation des Rotors gekennzeichnet, wobei am Anfang ein Statorzahn einer Nut und am Ende einem Rotorzahn gegenübersteht. Insbesondere bevorzugt stammen die Daten des ersten Datensatzes aus mehreren Rotorperioden. Die Daten des zweiten Datensatzes stammen bevorzugt aus einer oder mehreren vorangegangenen Rotorperioden, die weiter in der Vergangenheit liegen als Rotorperioden, denen Daten des ersten Datensatzes entsprechen. Alternativ sind Daten des zweiten Datensatzes bevorzugt Referenzdaten. Referenzdaten können von Messungen an anderen Motorexemplaren stammen oder können aggregierte Daten aus unterschiedlichen Messungen oder simulierte Daten sein. Bei den Kennlinien *Ψ(I)* werden mehreren Werten der Stromstärke *I* jeweils zumindest ein Wert eines verketteten magnetischen Flusses *Ψ* zugeordnet. Zur Ermittlung der ersten Kennlinie *Ψ(I)* werden für mehrere Werte-Tupel des ersten Datensatzes, welche zumindest die Stromstärke *I* und die induzierte Spannung *U*_{L} umfassen, jeweils ein Wert des verketteten magnetischen Flusses *Ψ* durch Integrieren der induzierten Spannung *U*_{L} ermittelt. Jeder so ermittelte Wert des verketteten magnetischen Flusses *Ψ* wird dem Wert der Stromstärke *I* des entsprechenden Werte-Tupels zugeordnet. Dies wird für mehrere Werte-Tupel durchgeführt, sodass eine Schar an Werte-Tupeln mit jeweils einem Wert der Stromstärke *I* und einem Wert des verketteten magnetischen Flusses *Ψ* vorliegt. Bevorzugt werden diese Werte-Tupel nach der Stromstärke *I* geordnet. Damit ist die erste Kennlinie *Ψ(I)* ermittelt. Der zweite Datensatz wird herangezogen, um die zweite Kennlinie *Ψ(I)* zu ermitteln. Mit den Werte-Tupeln des zweiten Datensatzes wird analog verfahren wie mit den Werte-Tupeln des ersten Datensatzes. Damit ist die zweite Kennlinie *Ψ(I)* gebildet. Es liegt im Sinne der Erfindung, dass die Kennlinien *Ψ(I)* nicht zwingend als Graphen vorliegen, sondern als entsprechend auswertbare Datenstrukturen, welche gleichwertige Informationen eines entsprechenden Graphen beinhalten. Insbesondere wurden Daten des ersten Datensatzes zu einem späteren Zeitpunkt aufgenommen und/oder ermittelt als Daten des zweiten Datensatzes. Die Ermittlung der Kennlinien ist vorteilhaft, um Zustandsgrößen ermitteln zu können, deren theoretischer Zusammenhang mit der Kennlinie *Ψ(I)* bekannt ist.

Vorzugsweise wird in Verfahrensschritt C als Zustandsgröße ein Drehmomentwert des Reluktanzmotors ermittelt, der insbesondere abhängig von einer von der Kennlinie *Ψ(I)* umschlossenen Fläche ermittelt wird. Im Bereich von Elektromotoren sind theoretische Zusammenhänge der Kennlinie *Ψ(I)* und einem Drehmoment von Elektromotoren bekannt. Das Drehmoment hängt ab von der Änderung einer mechanischen Energie *W*_{mech} bezüglich eines Drehwinkels des Rotors. Die von der Kennlinie umschlossene Fläche entspricht der Energie *W*_{mech}, die im von den Strangwicklungen erzeugten Magnetfeld gespeichert ist, welche auf die mechanische Leistung und damit auf den Drehmomentwert zurückgeführt wird. Der Drehmomentwert entspricht dabei einem mittleren Wert einer Rotorperiode, wie vorstehend definiert. Durch das erfindungsgemäße Verfahren kann somit ein Drehmomentwert ohne Einsatz weiterer Sensoren ermittelt werden.

Es ist daher vorteilhaft, dass in Verfahrensschritt C als Zustandsgröße eine Drehmomentänderung des Reluktanzmotors ermittelt wird, insbesondere abhängig von einer von der ersten Kennlinie *Ψ(I)* umschlossenen Fläche und abhängig von einer von der zweiten Kennlinie *Ψ(I)* umschlossenen Fläche ermittelt wird.

In einer bevorzugten Ausführungsform des erfindungsgemäßen Verfahrens wird in Verfahrensschritt C als Zustandsgröße eine Drehmomentänderung des Reluktanzmotors ermittelt. Die Drehmomentänderung hängt insbesondere von einer von der ersten Kennlinie *Ψ(I)* umschlossenen Fläche und abhängig von einer von der zweiten Kennlinie *Ψ(I)* umschlossenen Fläche ab. Wie vorstehend beschrieben, kann von der Größe der Fläche auf das Drehmoment geschlossen werden. Daher werden bei dieser vorteilhaften Ausführungsform Größen der von der ersten Kennlinie *Ψ(I)* und der zweiten Kennlinie *Ψ(I)* umschlossenen Fläche berechnet. Mittels einer Differenz der Größen der umschlossenen Flächen wird die Drehmomentänderung bestimmt. Die Bestimmung der Drehmomentänderung als Zustandsgröße ist vorteilhaft, weil dadurch Informationen für den Motorbetrieb gewonnen werden, die unter anderem zum Nachregeln oder in nachträglichen Auswertungen genutzt werden können.

In einer weiteren vorteilhaften Ausführungsform wird mittels der Auswerteeinheit für die erste Kennlinie *Ψ(I)* sowie für die zweite Kennlinie *Ψ(I)* jeweils zu den von ihnen umschlossenen Flächen zumindest eine affine Abbildung berechnet. Diese affinen Abbildungen stellen Flächen mit einer näherungsweisen gleichen Größe der umschlossenen Fläche im *I*-*Ψ*-Koordinatenraum dar. Bevorzugt weisen diese Flächen eine rechteckige Geometrie im *I*-*Ψ*-Koordinatenraum auf. Die Flächen können einen Winkel mit einer *I*-Achse des *I*-*Ψ*-Koordinatenraums aufweisen, wodurch eine Steigung der affinen Abbildung ermittelt werden kann. Alternativ oder ergänzend dazu wird die von der ersten Kennlinie *Ψ(I)* umschlossene Fläche mit der von der zweiten Kennlinie *Ψ(I)* umschlossenen Fläche anhand ihres jeweiligen Schwerpunkts verglichen. Eine durch den Ursprung und den Schwerpunkt verlaufende Gerade schließt einen Winkel mit der *I-*Achse des *I*-*Ψ*-Koordinatenraums ein, sodass eine Steigung definiert werden kann. Zwei zu verschiedenen Kennlinien *Ψ(I)* korrespondierende Schwerpunkte werden anhand ihres Abstands zueinander und anhand ihrer Steigungen miteinander verglichen. Wird in einer bevorzugten Ausführungsform des erfindungsgemäßen Verfahrens der Reluktanzmotor im 4-Quadrantenmodus betrieben, so beziehen sich bevorzugt die Schwerpunkte der umschlossenen Flächen jeweils auf denjenigen Teil der umschlossenen Fläche, der im Quadranten mit positiver Stromstärke *I* und positivem verketteten magnetischen Strom *Ψ* liegt. Damit kann auf einfache Weise eine Größe der umschlossenen Fläche und/oder eine Steigung definiert werden, welche wiederum zur Ermittlung von Zustandsgrößen genutzt werden.

In einer weiteren vorteilhaften Ausführungsform des erfindungsgemäßen Verfahrens sind in der Auswerteeinheit Referenzwerte der Kennlinie abrufbar. In Verfahrensschritt C werden diese Referenzwerte zur Ermittlung der Zustandsgröße herangezogen. Die Referenzwerte sind dabei voreingestellte Werte, die in der Auswerteeinheit bereitgestellt sind, und/oder historische Werte der Kennlinie des Reluktanzmotors. Bevorzugt werden in Verfahrensschritt C Charakteristiken der Kennlinie mit Charakteristiken der Referenzwerte oder einer aus den Referenzwerten gebildeten Referenzkennlinie verglichen und anhand des Vergleichs die Zustandsgröße ermittelt. Als Charakteristiken der Kennlinie dienen dazu Fläche, Form, Steigung und/oder Krümmungen der Kennlinie. Bevorzugt wird zur Quantifizierung der Form die mathematische Ableitung des verketteten magnetischen Flusses *Ψ* nach der Stromstärke und/ oder der Zeit herangezogen. Diese Ausführungsform ermöglicht die Ermittlung weiterer Zustandsgrößen, welche von den vorgenannten Charakteristiken abhängen, wodurch mehr Informationen über den Zustand gewonnen werden und das Verfahren verbessert wird.

Bei Kenntnis des Drehmomentwerts kann eine momentane Leistung des Reluktanzmotors ermittelt werden. Diese wird in einer vorteilhaften Ausführung des erfindungsgemäßen Verfahrens in einem Verfahrensschritt D anhand des in Verfahrensschritt C ermittelten Drehmomentänderung berechnet. Die momentane Leistung kann von einer Sollleistung, welche gerade angefordert wird, abweichen. In Verfahrensschritt D wird die momentane Leistung vorteilhafterweise anhand der in Verfahrensschritt C ermittelten Drehmomentänderung angeglichen. Damit wird erreicht, dass eine vom Motor angeforderte Leistung einer Sollleistung entspricht.

Bevorzugt wird der zweite Datensatz in Verfahrensschritt C aus der Auswerteeinheit abgerufen. Er enthält in dieser Ausführungsform des erfindungsgemäßen Verfahrens Referenzwerte für zumindest eine Stromstärke *I*, eine induzierte Spannung *U*_{L} und/oder eine davon abgeleitete Größe. Insbesondere wird aus den Referenzwerten eine Kennlinie *Ψ(I)* ermittelt, anhand derer im Zusammenhang mit einer ersten Kennlinie *Ψ(I)* die zumindest eine Zustandsgröße ermittelt wird. Dadurch wird ermöglicht, dass bei laufendem Betrieb Zustandsgrößen ermittelt werden, welche auf Referenzwerten oder historischen Daten beruhen.

In einer weiteren bevorzugten Ausführungsform wird anhand von Referenzwerten in Verfahrensschritt C eine Drehposition des Rotors relativ zum Stator ermittelt. Insbesondere liegen die Referenzwerte in Form einer Tabelle vor, in welcher bevorzugt Werte-Tupel des verketteten magnetischen Flusses *Ψ* und eines Drehwinkels gespeichert sind, sodass durch Vergleichen des ermittelten Wertes des verketteten magnetischen Flusses *Ψ* mit einem Referenzwert auf den Drehwinkel geschlossen wird. Somit wird ohne weitere Sensoren eine Drehposition des Rotors bestimmt.

In einer vorteilhaften Ausführungsform des erfindungsgemäßen Verfahrens wird in Verfahrensschritt C anhand von Referenzwerten ein Verschleißzustand des Reluktanzmotors ermittelt. Dazu wird mit den Referenzwerten eine Referenzkennlinie gebildet. Verschleiß am Motor kann sich etwa in zusätzlichen Asymmetrien bezüglich einer Rotationsachse des Rotors und dadurch erhöhten Unwucht zeigen. Dies ist in der Erkenntnis begründet, dass Verschleiß zu einem größeren Bremsmoment führt, wodurch die von der Kennlinie umschlossene Fläche schrumpft und die Leistung sinkt. Reagiert der Motor darauf, indem der zugeführte Strom verstärkt wird, dann führt das zu einer Ausdehnung der Kennlinie. Anhand der ersten Kennlinie wird eine Größe der umschlossenen Fläche bestimmt. Durch Vergleich dieser Größe mit einer Größe der von der Referenzkennlinie umschlossenen Fläche wird der Verschleiß des Reluktanzmotors bestimmt. Diese Ausführungsform bietet den Vorteil, dass Verschleiß des Motors ohne Einsatz weiterer Mittel feststellbar ist.

In einer weiteren Ausführungsformen wird in Verfahrensschritt C anhand Extrema der Kennlinie *Ψ(I)* ein Außer-Tritt-Fallen des Reluktanzmotors ermittelt. Beim Außer-Tritt-Fallen entspricht die anliegende Strangspannung in Frequenz und/oder Ein- und Ausschaltzeiten nicht der aktuellen Rotorposition und Drehzahl. Das kann dazu führen, dass ein Statorzahn bestromt wird, zu dem sich gerade nicht ein nahegelegener Rotorzahn bewegt. Damit steigt temporär die Stromstärke, da aber Statorzahn und Rotorzahn ungünstig zueinanderstehen, steigt der verkettete magnetische Fluss nicht genauso an, wie im synchronen Betrieb. Der verkettete magnetische Fluss kann auch temporär sinken, während die Stromstärke ansteigt, wenn der Motor außer Tritt gerät. Daher sinkt die Motorleistung. In der Kennlinie *Ψ(I)* zeigt sich dieser Zustand durch signifikante Abweichungen von der Hysteresekurve im synchronen Betrieb. Es kommt zu unregelmäßigen Ausformungen mit teilweise großer lokaler Steigung der Kennlinie. In dieser bevorzugten Ausführungsform werden daher anhand einer Anzahl der Extrema, ihrer relativen Position im *I*-*Ψ*-Koordinatenraum und/oder ihrer Steigung diese unregelmäßigen Ausformungen charakterisiert. Als Steigung wird dabei eine Steigung der Kennlinie an den Koordinaten des ermittelten Extremums verwendet. Bevorzugt wird die Anzahl der Extrema der ersten Kennlinie *Ψ(I),* die relativen Positionen der Extrema im *I*-*Ψ*-Koordinatenraum und/oder ihre Steigung mit der Anzahl der Extrema der zweiten Kennlinie *Ψ(I),* ihren relativen Positionen und/oder ihren Steigungen verglichen. Ein Außer-Tritt-Fallen des Reluktanzmotors liegt einerseits vor, wenn die Anzahl der Extrema der ersten Kennlinie größer ist als die Anzahl der Extrema der zweiten Kennlinie. Vorteilhafterweise werden daher Extrema der ersten Kennlinie *Ψ(I)* und der zweiten Kennlinie *Ψ(I)* ermittelt und deren jeweilige Anzahl miteinander verglichen. Zudem liegt ein Außer-Tritt-Fallen vor, wenn die Anzahl der Extrema beider Kennlinien *Ψ(I)* übereinstimmt, sich die Position der Extrema aber ändert. Um dies zu ermitteln, wird die Lage eines Extremums im *I*-*Ψ*-Koordinatenraum und dessen Steigung herangezogen. Bevorzugt wird daher eine Steigung der Kennlinien *Ψ(I)* an den Koordinaten der Extrema berechnet, um den Charakter eines Extremums zu bestimmen. Insbesondere bevorzugt wird geordnet nach der Stromstärke *I* für die erste und für die zweite Kennlinie *Ψ(I)* jeweils eine Sequenz der Extrema bestimmt. Mittels der Sequenzen der Extrema wird bevorzugt überprüft, inwieweit Koordinaten der Extrema der ersten Kennlinie *Ψ(I)* von Koordinaten der Extrema der zweiten Kennlinie *Ψ(I)* abweichen. Durch Quantifizierung dieser Abweichung kann auf ein Außer-Tritt-Fallen geschlossen werden. Dies ist vorteilhaft, da durch Erkennung eines Außer-Tritt-Fallens der Reluktanzmotors verlässlicher betrieben werden kann.

In einer vorteilhaften Ausführungsform wird während Verfahrensschritt B die Stromstärke *I* gemessen während der Strang unbestromt ist. Im unbestromten Zustand ist der Strang nicht leitend mit der Spannungsquelle verbunden. Es wird eine Messspannung angelegt. Diese Messspannung ist deutlich geringer als eine Spannung, die anliegt, wenn der Strang mit leitend mit der Spannungsquelle verbunden ist. Mit der Stromstärke *I* wird zumindest ein Werte-Tupel gebildet. Aus einem oder mehreren Werte-Tupeln wird der erste Datensatz gebildet. Dies ist vorteilhaft, da zusätzliche Informationen gewonnen werden, die im Zustand dem unbestromten Zustand des Strangs entsprechen und somit zur weiteren Erkenntnisgewinnung genutzt werden können.

In einer weiteren bevorzugten Ausführungsform des erfindungsgemäßen Verfahrens wird in Verfahrensschritt C als Zustandsgröße eine Temperatur berechnet, indem zumindest ein Werte-Tupel des ersten Datensatzes mit einer Mehrzahl an Werte-Tupeln des zweiten Datensatzes verglichen wird. Das Werte-Tupel des ersten Datensatzes umfasst eine im unbestromten Zustand des Strangs gemessene Stromstärke. Die Werte-Tupel des zweiten Datensatzes umfassen jeweils zumindest einen Referenzwert. Ein Referenzwert ist bevorzugt ein Wert der Stromstärke, der einer Temperatur des Strangs entspricht. Bevorzugt sind die Werte-Tupel im zweiten Datensatz geordnet und es werden Intervalle der Stromstärke gebildet, welche Intervalle jeweils einem Wert der Temperatur entsprechen. Besonders bevorzugt wird mittels der Auswerteeinheit zwischen den Referenzwerten interpoliert und eine Temperaturfunktion in Abhängigkeit von der Stromstärke berechnet. Durch das erfindungsgemäße Verfahren ist daher eine Temperatur des Strangs ohne Hinzunahme weiterer Sensoren ermittelbar.

Vorteilhaft weitergebildet ist das erfindungsgemäße Verfahren außerdem, indem in Verfahrensschritt B die Stromstärke *I* und Spannungen mehrerer Strangwicklungen parallelgeschaltet oder seriell geschaltet gemessen werden. Bei Reihenschaltung der Strangwicklungen wird der Strom aller Strangwicklungen gemeinsam gemessen. Daher werden weniger Daten produziert und dennoch die Information des Stroms aller beteiligten Spulen berücksichtigt.

In einer weiteren vorteilhaften Ausführungsform des erfindungsgemäßen Verfahrens werden in Verfahrensschritt B die Stromstärke *I* und Spannungen mehrerer Strangwicklungen parallelgeschaltet und unabhängig voneinander gemessen. Die Parallelschaltung der Strangwicklungen ermöglicht die Messung des Stroms jeder einzelnen Spule unabhängig. In dieser alternativen Ausführung können die Stromstärken einzelner Spulen miteinander verglichen werden, wodurch Inkonsistenzen der gemessenen Stromstärken festgestellt werden können.

In einer vorteilhaften Ausführungsform wird das Verfahren mit einem Reluktanzmotor durchgeführt welcher Permanentmagnete aufweist, wobei eine magnetische Wirkung der Permanentmagnete im Verfahren berücksichtigt wird. Bevorzugt sind die Permanentmagnete am Stator oder am Rotor angeordnet. Reluktanzmotoren mit Permanentmagneten sind aus dem Stand der Technik bekannt, beispielsweise aus Hongsik Hwang, Jin Hur and Cheewoo Lee, "Novel permanent-magnet-assisted switched reluctance motor (I): Concept, design, and analysis," 2013 International Conference on Electrical Machines and Systems (ICEMS), Busan, Korea (South), 2013, pp. 602-608, doi: 10.1109/ICEMS.2013.6754501. Versuche wie in der genannten Quelle haben gezeigt, dass Permanentmagnete in oder an einem Reluktanzmotor dazu dienen können, eine vom Reluktanzmotor erzeugte Leistung zu steigern. Zusätzliche Permanentmagnete am Reluktanzmotor verändern aber auch den magnetischen Fluss im Reluktanzmotor. Im erfindungsgemäßen Verfahren führt diese magnetische Wirkung zu einer betragsmäßigen Erhöhung des verketteten magnetischen Flusses *Ψ*. Unbeachtet könnte diese magnetische Wirkung zu falschen Werten der Zustandsgrößen bei deren Ermittlung führen, wodurch das Verfahren unzuverlässige Ergebnisse liefern könnte. Daher wird die magnetische Wirkung der Permanentmagnete bei der Ermittlung der ersten Kennlinie *Ψ(I)* und bei der Ermittlung der zweiten Kennlinie *Ψ(I)* berücksichtigt. Insbesondere wird die magnetische Wirkung der Permanentmagnete als ein Offset des verketteten magnetischen Flusses *Ψ* berücksichtigt. Dadurch ergibt sich der Vorteil, dass Permanentmagnete leistungssteigernd eingesetzt werden können und deren Effekt auf den magnetischen Fluss im erfindungsgemäßen Verfahren berücksichtigt werden kann, sodass ohne weitere Sensoren verlässlich Zustandsgrößen des Reluktanzmotors ermittelbar sind.

Weiterhin betrifft die Erfindung eine Fluidsystemkomponente mit einem Reluktanzmotor. Die erfindungsgemäße Fluidsystemkomponente mit einem Reluktanzmotor ist ausgebildet, das vorbeschriebene Verfahren durchzuführen. Insbesondere umfasst der Reluktanzmotor Mittel zum Messen zumindest einer Stromstärke *I* und/oder zum Ermitteln einer induzierten Spannung *U*_{L} der Strangwicklung. Außerdem umfasst der Reluktanzmotor eine Auswerteeinheit, die eingerichtet ist, das vorbeschriebene Verfahren durchzuführen. Dadurch können vorteilhafterweise ohne Hinzunahme weiterer Sensoren Zustandsgrößen des Reluktanzmotors ermittelt werden.

Bevorzugt ist die Fluidsystemkomponente als eine Wechselarmatur, als eine Pumpe oder als ein Ventil ausgebildet.

Durch die Ausbildung und Einrichtung des Reluktanzmotors, das vorbeschriebene Verfahren durchzuführen, betreffen vorteilhafte Ausführungsformen des Verfahrens ebenfalls den Reluktanzmotor.

Weitere bevorzugte Merkmale und Ausführungsformen des erfindungsgemäßen Verfahrens werden im Folgenden anhand von Ausführungsbeispielen und den Figuren erläutert. Die Ausführungsbeispiele sind lediglich vorteilhafte Ausgestaltungen der Erfindung und nicht einschränkend. Es zeigen:
- Figuren 1a, 1b:: Schematische Darstellungen eines beispielhaften Reluktanzmotors mit einer Auswerteeinheit,
- Figur 2:: eine schematische Darstellung eines Ausführungsbeispiels des erfindungsgemäßen Verfahrens,
- Figuren 3, 4, 5:: qualitative Beispiele von Auswertungen der Kennlinie *Ψ(I),*
- Figuren 6a - 6c:: Beispiele von Kennlinien *Ψ(I)* zur Ermittlung eines Außer-Tritt-Fallens als Zustandsgröße,
- Figur 7:: eine vereinfachte Schaltung zur Ermittlung einer Temperatur,
- Figur 8:: eine schematische Darstellung einer Fluidsystemkomponente mit Reluktanzmotor,
- Figuren 9 und 10:: schematische Darstellungen einer als Wechselarmatur ausgebildeten Fluidsystemkomponente mit einem Reluktanzmotor,
- Figur 11:: eine schematische Darstellung einer als Pumpe ausgebildeten Fluidsystemkomponente mit einem Reluktanzmotor und
- Figur 12:: eine schematische Darstellung einer als Ventil ausgebildeten Fluidsystemkomponente mit einem Reluktanzmotor.

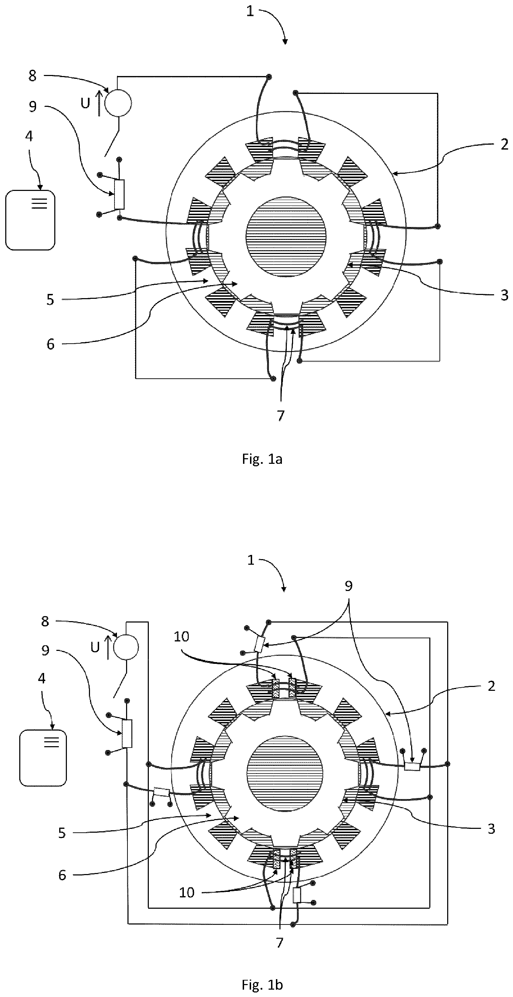

Die Figuren 1a und 1b zeigen schematische Darstellungen eines Reluktanzmotors 1, der geeignet ist, das erfindungsgemäße Verfahren durchzuführen.

Der Reluktanzmotor 1 weist einen Stator 2 mit Statorzähnen 5 und einen Rotor 3 mit Rotorzähnen 6 auf. Er besitzt einen Strang mit einer Strangwicklung 7 je Statorzahn 5. Der Reluktanzmotor 1 wird mit einer Spannungsquelle 8 bespeist. Die Strangwicklungen 7 sind beim Reluktanzmotor 1 in Figur 1a in Reihe geschaltet. Durch einen Messwiderstand 9 ist die Stromstärke im Strang messbar.

Im Unterschied zu Figur 1a ist in Figur 1b eine Ausgestaltung eines Reluktanzmotors 1 gezeigt, bei dem die Strangwicklungen 7 eines Statorzahns 5 parallelgeschaltet sind. In diesem Beispiel ist zudem für jeden Statorzahn 5 ein Messwiderstand 9 angeordnet, sodass Stromstärken in zueinander parallelgeschalteten Strangwicklungen 7 unabhängig voneinander gemessen werden können. Zudem weist der Reluktanzmotor in Fig. 1b Permanentmagnete 10 auf, welche sich begünstigend auf den magnetischen Fluss auswirken und ein größeres Drehmoment sowie ein effizienteres Arbeiten des Reluktanzmotors 1 ermöglichen. Vorliegend sind die Permanentmagnete 10 an Statorzähnen 5 angeordnet. Alternativ könnten sie am Rotor 3 angeordnet sein.

In den beiden in Fig. 1a und Fig. 1b gezeigten Beispielen ist eine Auswerteeinheit 4 datentechnisch mit Mitteln zur Strom- und Spannungsmessung verbunden.

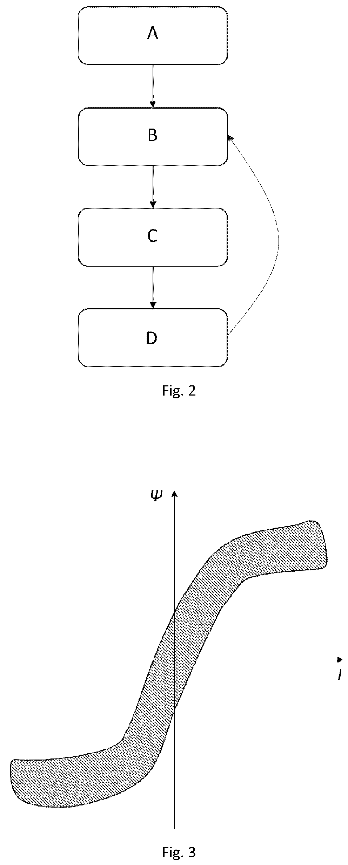

Figur 2 zeigt einen schematischen Ablauf eines Ausführungsbeispiels des erfindungsgemäßen Verfahrens.

Zunächst wird in Verfahrensschritt A der Reluktanzmotor 1 in Betrieb genommen.

In Verfahrensschritt B wird im laufenden Betrieb die Stromstärke *I* im Strang sowie die an einem Statorzahn 5 abfallende Spannung gemessen. Anhand der gemessenen Spannung wird die induzierte Spannung *U*_{L} bestimmt. Mittels Integrierens der induzierten Spannung *U*_{L} wird davon der verkettete magnetische Strom *Ψ* abgeleitet. Als weitere Größe wird der Zeitpunkt *t* jeder Messung gespeichert. Pro Messung wird ein Werte-Tupel mit den folgenden Einträgen erstellt: (*t*, *I*, *U_{L}*, *Ψ*)*.* Aus mehreren aufeinanderfolgenden Werte-Tupeln wird ein erster Datensatz erstellt. Die Daten im ersten Datensatz entsprechen einer Rotorperiode.

Zur Auswertung mit der Auswerteeinheit 4 wird ein zweiter Datensatz herangezogen. Vorliegend wurde der zweite Datensatz aus zur vorangegangenen Rotorperiode gehörigen Werte-Tupeln gebildet.

Aus den Werte-Tupeln des ersten Datensatzes wird eine erste Kennlinie *Ψ(I)* erstellt, indem die Werte-Tupel aufsteigend nach dem Zeitpunkt t angeordnet werden. Damit ist es möglich, den verketteten magnetischen Fluss *Ψ* als Ordinate und die Stromstärke *I* als Abszisse in einem Graphen zu nutzen. Zum Zweck der weiteren Auswertung ist es nicht erforderlich, die Kennlinie *Ψ(I)* als Graph darzustellen. Vielmehr erfolgt die Auswertung rein rechnerisch auf Basis der entsprechend angeordneten Daten. Durch den Hysterese-Charakter des *Ψ*-*I*-Verlaufs während einer Rotorperiode können für gleiche Werte der Stromstärke I mehrere Werte des verketteten magnetischen Flusses *Ψ* vorliegen. Mit dem zweiten Datensatz wird analog verfahren und daraus eine zweite Kennlinie *Ψ(I)* erstellt.

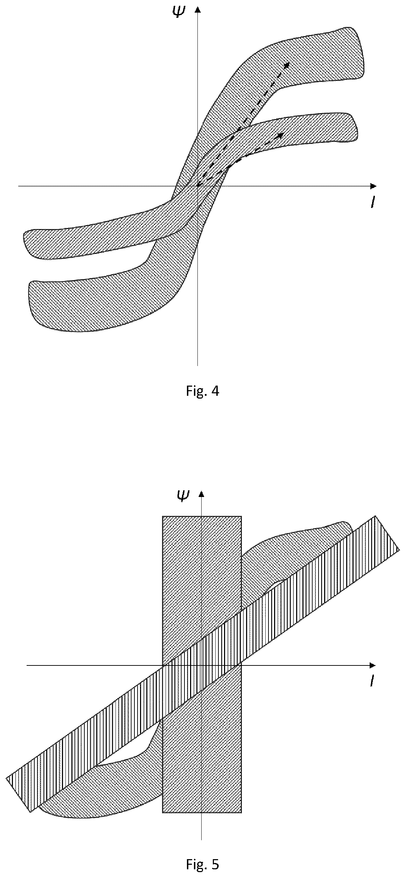

Die erste Kennlinie *Ψ(I)* ist in Fig. 3 gezeigt. Vorliegend wird der Reluktanzmotor 1 im 4-Quadranten-Modus betrieben. Durch den Hysterese-Charakter der Kennlinie definiert ihr Verlauf eine umschlossene Fläche. In Fig. 4 sind die erste Kennlinie und die zweite Kennlinie übereinandergelegt dargestellt. Da ihr Verlauf jeweils näherungsweise symmetrisch im ersten und im dritten Quadranten ist, wird für den Vergleich nur der erste Quadrant betrachtet. Für beide Kennlinien wird jeweils der Schwerpunkt der umschlossenen Fläche berechnet. Zwischen den Schwerpunkten wird der geometrische Abstand und die Steigung der Geraden, die durch den Schwerpunkt und durch den Punkt (*I*, *Ψ*) = (0, 0) verlaufen berechnet.

Weiterhin werden für die Kennlinien zwei affine Abbildungen berechnet. Dies ist schematisch für die erste Kennlinie in Fig. 5 dargestellt. Aus diesen affinen Abbildungen wird sowohl die Größe der umschlossenen Flächen als auch eine Steigung der Kennlinien erfasst. Diese Größen werden genutzt, um die Flächenunterschiede zwischen beiden Kennlinien zu charakterisieren.

Die erste Kennlinie wird außerdem zur Ermittlung des Verschleißzustands genutzt. Als ein zweiter Datensatz wird dazu in der Auswerteeinheit 4 ein Datensatz herangezogen, der Referenzwerte beinhaltet. Dieser Datensatz wurde anhand eines Reluktanzmotors ermittelt, der Permanentmagnete 10 am Stator aufweist. In der resultierenden zweiten Kennlinie zeigt sich dies, indem ein Offset des verketteten magnetischen Flusses entsteht, also größere Werte des verketteten magnetischen Flusses vorliegen. Diese Kenntnis über den Offset wird genutzt um eine Korrektur der zweiten Kennlinie *Ψ(I)* vorzunehmen, indem für jedes *I*- *Ψ* Werte-Tupel ein Betrag entsprechend dem Offset auf *Ψ*-Werte angerechnet wird. Vergleichswerte der umschlossenen Flächen bezüglich Steigung und Größe der Fläche zeigen auch unter Berücksichtigung der Korrektur, dass die erste Kennlinie eine größere umschlossene Fläche besitzt als die zweite Kennlinie *Ψ(I),* wodurch ein Verschleiß ermittelt wird.

Als Zustandsgröße wird aus dem Unterschied der umschlossenen Flächen eine Drehmomentänderung ermittelt. Mittels der Auswerteeinheit(4 wird festgestellt, dass die momentane Leistung des Reluktanzmotors 1 größer ist als die angeforderte Sollleistung. In einem folgenden Verfahrensschritt D wird die berechnete Drehmomentänderung genutzt, um die momentane Motorleistung zu drosseln , sodass sie der Sollleistung entspricht.

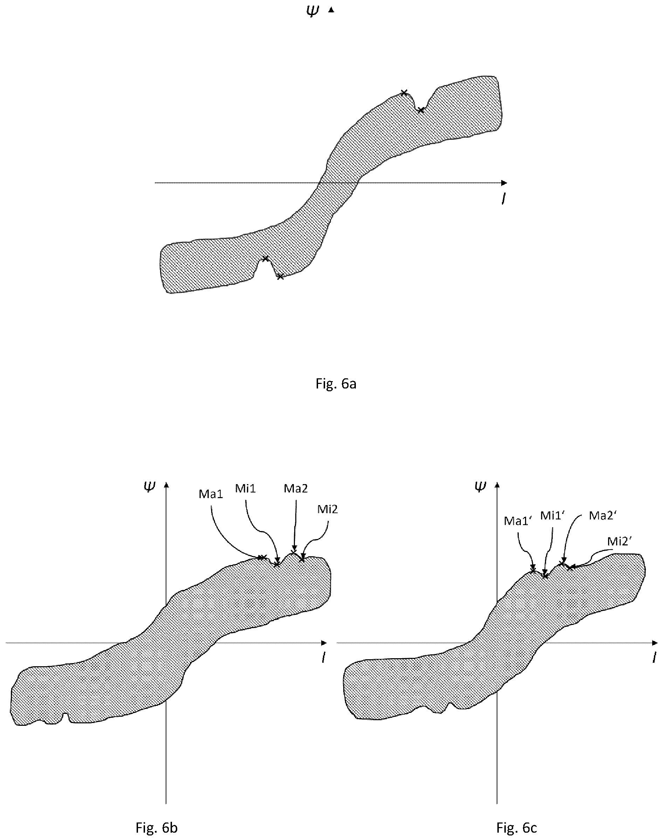

Eine weitere beispielhafte Ausführung von Verfahrensschritt C des erfindungsgemäßen Verfahrens ist in Fig. 6a dargestellt. Der Reluktanzmotor fällt außer Tritt, sodass während jeder Rotorperiode für kurze Zeit ein bestromter Statorzahn 5 den Rotor 3 bremst und somit das Drehmoment verringert. In der Kennlinie *Ψ(I)* zeigt sich dieser Zustand, indem Einbuchtungen auftreten, welche die von der Kennlinie umschlossene Fläche verringern. Fig. 6a zeigt beispielhaft einen Verlauf der ersten Kennlinie *Ψ(I).* Die umschlossene Fläche im ersten und im dritten Quadranten weist Einbuchtungen auf, welche in Verfahrensschritt C anhand der Anzahl der Extrema (Ma1, Mi1, Ma2, Mi2) erkannt werden können. Zur Veranschaulichung des Verfahrens werden nur signifikante lokalen Extrema herangezogen. Fig 3 wird für dieses Ausführungsbeispiel als Verlauf der zweiten Kennlinie herangezogen. Eine Berechnung der Auswerteeinheit 4 ergibt, dass die erste Kennlinie im Vergleich zur zweiten Kennlinie jeweils zwei zusätzliche signifikante Extrema im ersten und im dritten Quadranten aufweist, wodurch ein Außer-Tritt-Fallen des Reluktanzmotors festgestellt wird.

In den Figuren 6b und 6c ist jeweils ein Beispiel einer Kennlinien *Ψ(I)* dargestellt. Fig. 6b zeigt den Verlauf einer zweiten Kennlinie *Ψ(I)* und Fig. 6c zeigt den Verlauf einer ersten Kennlinie *Ψ(I)* aus einer auf die zweite Kennlinie folgenden Rotorperiode. Die erste Kennlinie wurde aus Werte-Tupeln gebildet, die in Verfahrensschritt B gemessen wurden. Die zweite Kennlinie kann entweder gemessenen Werten oder aus Referenzwerten gebildet sein. Zur Veranschaulichung des Verfahrens werden nur die markierten Extrema Ma1, Mi1, Ma2, Mi2 der Kennlinien betrachtet. In Verfahrensschritt C wird mit der Auswerteeinheit 4 ermittelt, dass die Anzahl an Extrema der ersten Kennlinie mit der Anzahl an Extrema der zweiten Kennlinie übereinstimmt. Für die zweite Kennlinie (Fig. 6a) werden die Steigungen der Kennlinie in den Extrema berechnet. Damit wird das erste Extremum als Maximum Ma1 identifiziert. Auch die übrigen Extrema werden mittels der Steigung als Minima oder Maxima charakterisiert. Mit steigender Stromstärke *I* ergibt sich eine Sequenz der Extrema Ma1, Mi1, Ma2, Mi2 der zweiten Kennlinie. Eine analoge Auswertung wird für die Extrema Ma1', Mi1', Ma2', Mi2' der ersten Kennlinie durchgeführt und bezüglich des Charakters der Extrema dieselbe Sequenz festgestellt. In der späteren Rotorperiode, die der ersten Kennlinie entspricht, hat sich die Lage der Extrema Ma1', Mi1', Ma2', Mi2' jeweils zu geringerer Stromstärke verschoben. Für beide Kennlinien werden jeweils die Stromstärken, die den Extrema entsprechen, summiert. Diese Summe ist bei der ersten Kennlinie mit den Extrema Ma1', Mi1', Ma2', Mi2' geringer als die Summe der zweiten Kennlinie mit den Extrema Ma1, Mi1, Ma2, Mi2. Als Zustandsgröße wird so ein Außer-Tritt-Fallen des Reluktanzmotors anhand der Lage der Extrema der Kennlinien berechnet.

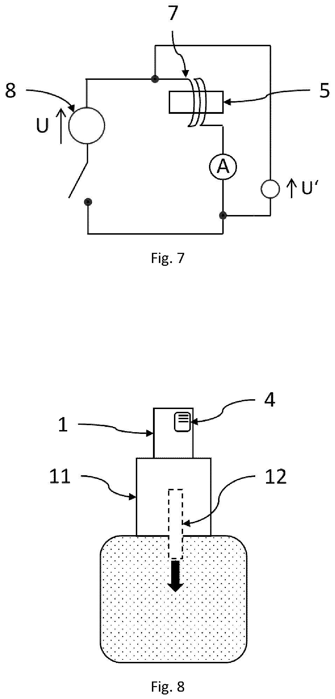

In Fig. 7 ist eine vereinfachte, schematische Schaltung gezeigt, mittels der in Verfahrensschritt C eine Temperatur als Zustandsgröße ermittelt wird. Dargestellt ist nur ein Statorzahn 5 des Reluktanzmotors 1, der von der Strangwicklung 7 umwickelt ist. Der Reluktanzmotor 1 ist im Betrieb und seine Statorzähne 5 werden sukzessive ein- und ausgeschaltet. Der dargestellte Statorzahn 5 ist gerade unbestromt, also nicht mit der Spannungsquelle 8 verbunden. Es wird eine Messspannung U' angelegt, welche deutlich geringer ist als eine Spannung U der Spannungsquelle 8. Wegen der Messspannung U' fließt ein geringer Strom durch die Strangwicklung 7. In Verfahrensschritt B wird die Stromstärke *I* gemessen, welche als Werte-Tupel der Länge 1 in den ersten Datensatz eingetragen wird. In Verfahrensschritt C wird mit der Auswerteeinheit 4 der erste Datensatz mit einem zweiten Datensatz verglichen. Der zweite Datensatz umfasst Intervalle von Stromstärken als Referenzwerte, welchen jeweils eine Temperatur zugeordnet ist. Durch Interpolieren wird eine kontinuierliche Funktion der Temperatur in Abhängigkeit von der Stromstärke ermittelt und anhand der Stromstärke *I* des ersten Datensatzes somit die Temperatur als Zustandsgröße berechnet.

Ist Fig. 8 ist schematisch eine Fluidsystemkomponente 11 mit einem Reluktanzmotor 1 dargestellt. Die Fluidsystemkomponente 11 ist eine Wechselarmatur für Fluidsysteme und weist einen Reluktanzmotor 1 auf, mit dem eine Messlanze ein- und ausfahrbar ist, und wird an einem Prozessbehälter eines Fluidsystems befestigt. Im Prozessbehälter lagert eine Flüssigkeit. Die Messlanze wird mittels des Reluktanzmotors 1 ausgefahren. Dabei wird eine erste Kennlinie *Ψ(I)* ermittelt. Aus in der Auswerteeinheit 4 hinterlegten Referenzwerten wird eine zweite Kennlinie *Ψ(I)* ermittelt. Wie zuvor beschrieben wird durch Vergleich beider Kennlinien ein Verschleiß der Wechselarmatur bestimmt. Alternativ könnte das Verfahren mit einer als Ventil ausgebildeten Fluidsystemkomponente ausgeführt werden, welches mittels des Reluktanzmotors 1 verstellt wird um einen Durchfluss in einer Rohrleitung abzusperren, oder mit einer als Pumpe ausgebildeten Fluidsystemkomponente, welche einen Reluktanzmotor 1 aufweist und in einer hydraulischen Schaltung einen Druck aufbaut, und so ein Verschleiß der Fluidsystemkomponente ermittelt werden.

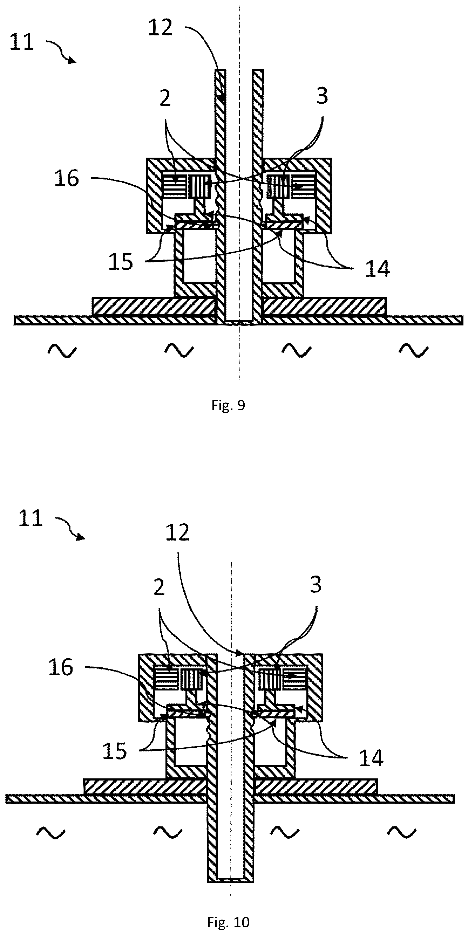

Figuren 9 und 10 zeigen eine schematische Darstellung einer als Wechselarmatur 11 ausgebildeten Fluidsystemkomponente 11 mit einem Reluktanzmotor 1. Die Wechselarmatur weist eine Messlanze 12 auf, welche sich in Figur 9 in einer ausgefahrenen und in Figur 10 in einer in ein Flüssigkeitsbehältnis eingefahrenen Stellung befindet. Der Rotor 3 weist eine Ausnehmung auf, in der die Messlanze 12 angeordnet ist. Der Stator 2 ist mit einem Gehäuse der Wechselmatur 11 verbunden und schließt den darin drehbar gelagerten Rotor 3 ein. Die Wechselarmatur umfasst außerdem ein Zykloidgetriebe und einen Spindeltrieb mit Spindelmutter und Gewindespindel, wobei das Zykloidgetriebe zur Übertragung des durch den Elektromotor aufgebrachten Drehmoments auf den Spindeltrieb ausgebildet ist. Eine Außenseite der Messlanze 12 ist als Gewinde ausgebildet und nimmt so die Funktion der Gewindespindel des Spindeltriebes ein. Das Zykloidgetriebe verfügt in dieser Ausführungsform über eine hohl ausgestaltete Exzenterwelle 14, die die Messlanze 12 umgibt. Ebenso ist eine Rollenscheibe 15 vorhanden, die eine Ausnehmung aufweist und somit die Messlanze 12 umschließt. Die Rollenscheibe 15 weist vertikal zur Erstreckung der Rollscheibe angeordnete Rollen auf. Des Weiteren weist das Zykloidgetriebe eine Kurvenscheibe sowie feststehende Abrollbolzen auf, die ringförmig um die Exzenterwelle 14 angeordnet sind. Die Exzenterwelle 14 ist mit dem Rotor 3 verbunden.

Die Rollenscheibe 15 ist über eine zentrische Abtriebswelle mit der Spindelmutter 16 des Spindeltriebs verbunden. Die Kurvenscheibe ist um die Exzenterwelle 14 angeordnet. Treibt der Reluktanzmotor 1 die Exzenterwelle 14 an, so wird die Kurvenscheibe exzentrisch bewegt, sodass die Kurvenscheibe um ihre Symmetrieachse rotiert. In der Kurvenscheibe sind Löcher angebracht, die relativ zur Exzenterwelle 14 rotieren. In diese Löcher greifen die Rollen der Rollenscheibe 15. Die Kurvenscheibe treibt auf diese Weise die Rollenscheibe 15 an, an der auch die zentrisch gelagerte Abtriebswelle angeordnet ist und koaxial zur Antriebswelle sitzt. Die mit der Abtriebswelle verbundene Spindelmutter 16 ist eingreifend in die Gewindespindel der Messlanze 12 angeordnet, sodass die rotatorische Bewegung der Spindelmutter 16 zu einer translatorischen Bewegung der Messlanze 12 führt. Somit wird die Drehbewegung der Spindelmutter 16 über die Gewindespindel zu einer linearen Bewegung der Messlanze 12 gewandelt. Durch das wie vorstehend beschriebene Verfahren zur Ermittlung von Zustandsgrößen wird anhand von Kennlinien *Ψ(I)* eine Drehposition des Rotors relativ zum Stator ermittelt sowie ein Verschleiß ermittelt.

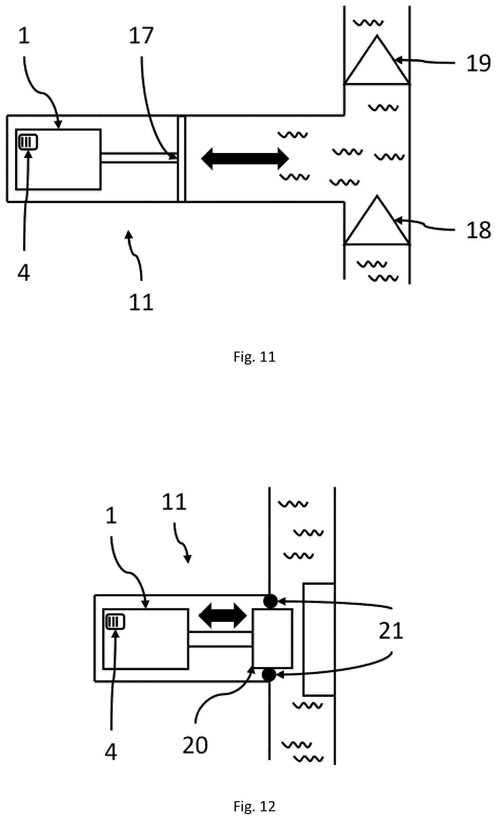

In Figur 11 ist schematisch eine als Pumpe 11 ausgebildete Fluidsystemkomponente 11 mit einem Reluktanzmotor 1 dargestellt. Der Reluktanzmotor 1 treibt eine Spindel an, an deren Ende ein Hubkolben 17 befestigt ist. Mittels des Reluktanzmotors 1 wird die Spindel verfahren und so der Hubkolben 17 bewegt. Die Pumpe 11 ist mit einer Rohrleitung verbunden, sodass die Pumpe 11 zwischen einem Einlassventil 18 und einem Auslassventil 19 sitzt. Durch die Rohrleitung wird ein Fluid geleitet. Ein Volumen der Rohrleitung, in welches sich das Fluid ausdehnen kann, ändert sich bei Bewegung des Hubkolben 17. Bei Vergrößerung des Volumens sinkt ein Leitungsdruck, sodass das Einlassventil 18 sich öffnet und zusätzliches Fluid einströmt. Bei Verringerung des Volumens steigt der Leitungsdruck an, das Auslassventil 19 öffnet sich und das Fluid fließt ab. Wie im Vorangegangenen beschrieben, wird durch Messung von Spannungen und Strömen im Reluktanzmotor 1 mittels der Auswerteeinheit 4 des Reluktanzmotors eine erste Kennlinie *Ψ(I)* ermittelt. Sie wird mit in der Auswerteeinheit 4 hinterlegten Referenzwerten verglichen, um einen Verschleiß des Reluktanzmotors 1 zu ermitteln. Nicht dargestellt sind Lagerungselemente der Pumpe 11. Durch Verschleiß dieser Lagerungselemente kann zusätzliche Reibung entstehen, wodurch der Reluktanzmotor 1 ein größeres Drehmoment aufbringen muss. Dies zeigt sich beim Vergleich der Kennlinie *Ψ(I)* mit entsprechenden Referenzdaten, indem eine von der Kennlinie umschlossene Fläche sich vergrößert im Vergleich zu Referenzwerten der umschlossenen Fläche. Damit wird ein Verschleiß von Lagerungselementen erkannt. Zudem werden anhand der ersten Kennlinie *Ψ(I)* Drehmomentänderungen gegenüber einer zweiten Kennlinie *Ψ(I)* ermittelt, die aus einer vorangegangenen Rotorperiode stammt, woraus Informationen über eine Änderung der Viskosität des Fluids ermittelt werden.

In Figur 12 ist schematisch eine als Ventil 11 ausgebildete Fluidsystemkomponente 11 mit einem Reluktanzmotor 1 dargestellt. Der Reluktanzmotor 1 treibt eine Spindel an, an deren Ende ein Verschluss 20 befestigt ist. Mittels des Reluktanzmotors 1 wird die Spindel verfahren und so der Verschluss 20 bewegt. Das Ventil 11 ist mit einer Rohrleitung verbunden. Sitzt der Verschluss 20 auf einem Ventilsitz auf, dann befindet sich das Ventil 11 in einer Verschlussstellung, in der kein Fluid durch die Rohrleitung fließen kann. Der Reluktanzmotor 1 weist eine Auswerteeinheit 4 auf, welche wie vorstehend beschrieben beim Betrieb eine erste Kennlinie *Ψ(I)* ermittelt. Trifft der Verschluss 20 auf den Ventilsitz, dann kann die Spindel nicht weitergetrieben werden. Anhand der Kennlinie *Ψ(I)* kann dieser Zustand daran erkannt werden, dass keine Änderung des verketteten magnetischen Flusses stattfindet und eine von der Kennlinie *Ψ(I)* umschlossene Fläche verschwindet. Der Verschluss 20 der Pumpe 11 ist mit einem Dichtring 21 abgedichtet, sodass kein Fluid zum Antrieb fließt. Bei Abnutzung der Dichtung kann sich die Reibung erhöhen. Dies ist erkennbar durch einen Vergleich der ersten Kennlinie *Ψ(I)* mit Referenzwerten. Ebenso kann ein Verlust eines Dichtmittels erkannt werden.

### Bezugszeichen

- 1: Reluktanzmotor
- 2: Stator
- 3: Rotor
- 4: Auswerteeinheit
- 5: Statorzahn
- 6: Rotorzahn
- 7: Strangwicklung
- 8: Spannungsquelle
- 9: Messwiderstand
- 10: Permanentmagnet
- 11: Fluidsystemkomponente , Wechselarmatur, Pumpe, Ventil
- 12: Messlanze
- 13: Gewindespindel
- 14: Exzenterwelle
- 15: Rollenscheibe
- 16: Spindelmutter
- 17: Hubkolben
- 18: Einlassventil
- 19: Auslassventil
- 20: Verschluss
- 21: Dichtring

## Patentansprüche

1. Verfahren zur Ermittlung von zumindest einer Zustandsgröße einer Fluidsystemkomponente (11), insbesondere eine Wechselarmatur oder eine Pumpe oder ein Ventil, mit einem Reluktanzmotor (1), welcher einen Rotor (3) und einen Stator (2) aufweist, mittels einer Auswerteeinheit (4), wobei der Stator (2) mehrere Statorzähne (5) aufweist, die jeweils von zumindest einer Strangwicklung (7) eines Strangs umwickelt sind und wobei der Rotor (3) mehrere Rotorzähne (6) aufweist,
die folgenden Verfahrensschritte umfassend:
A Inbetriebnehmen des Reluktanzmotors (1);
B Messen zumindest einer Stromstärke *I* und/oder Ermitteln zumindest einer induzierten Spannung *U*_{L} der Strangwicklung und/oder einer davon abgeleiteten Größe, sowie Erstellen eines ersten Datensatzes mit zumindest einem Werte-Tupel, bevorzugt einer Mehrzahl an Werte-Tupeln, welche zumindest die Stromstärke *I* und/oder die induzierte Spannung *U*_{L} und/oder eine davon abgeleitete Größe umfassen;
C Berechnen zumindest einer Zustandsgröße mittels der Auswerteeinheit (4) anhand des ersten Datensatzes und anhand eines zweiten Datensatzes, wobei der zweite Datensatz eine Mehrzahl an Werte-Tupeln aufweist, welche zumindest eine Stromstärke *I* und/oder zumindest eine induzierte Spannung *U*_{L} der Strangwicklung und/oder eine davon abgeleitete Größe umfassen.

2. Verfahren nach Anspruch 1,
**dadurch gekennzeichnet, dass** anhand des ersten Datensatzes eine erste Kennlinie *Ψ(I)* ermittelt wird und anhand des zweiten Datensatzes eine zweite Kennlinie *Ψ(I)* ermittelt wird, bei welchen Kennlinien *Ψ(I)* mehreren Werten der Stromstärke *I* jeweils zumindest ein Wert eines verketteten magnetischen Flusses *Ψ* zugeordnet ist.

3. Verfahren nach Anspruch 2,
**dadurch gekennzeichnet, dass** in Verfahrensschritt C als Zustandsgröße eine Drehmomentänderung des Reluktanzmotors (1), ermittelt wird, insbesondere abhängig von einer von der ersten Kennlinie *Ψ(I)* umschlossenen Fläche und abhängig von einer von der zweiten Kennlinie *Ψ(I)* umschlossenen Fläche ermittelt wird.

4. Verfahren nach Anspruch 3,
**dadurch gekennzeichnet, dass** die zumindest eine Zustandsgröße anhand einer Größe und/oder einer Steigung mindestens jeweils einer affinen Abbildung der umschlossenen Flächen berechnet wird, und/oder, dass die zumindest eine Zustandsgröße anhand jeweils eines Schwerpunkts der umschlossenen Flächen, insbesondere anhand einer Steigung einer Ursprungsgeraden durch einen Schwerpunkt der umschlossenen Fläche, berechnet wird.

5. Verfahren nach Anspruch 4,
**dadurch gekennzeichnet, dass** ein weiterer Verfahrensschritt D durchgeführt wird, in welchem eine momentane Leistung des Reluktanzmotors (1), anhand der in Verfahrensschritt C ermittelten Änderung des Drehmoments berechnet und an eine Sollleistung angeglichen wird.

6. Verfahren nach einem der voranstehenden Ansprüche,
**dadurch gekennzeichnet, dass** aus der Auswerteeinheit (4) der zweite Datensatz abgerufen wird und Referenzwerte für zumindest eine Stromstärke *I* und/oder eine induzierte Spannung *U*_{L} und/oder eine davon abgeleitete Größe umfasst, sowie, dass in Verfahrensschritt C die zumindest eine Zustandsgröße anhand der im zweiten Datensatz vorliegenden Referenzwerte ermittelt wird.

7. Verfahren nach Anspruch 6,
**dadurch gekennzeichnet, dass** in Verfahrensschritt C anhand der Referenzwerte als Zustandsgröße eine Drehposition des Rotors relativ zum Stator ermittelt wird.

8. Verfahren nach Anspruch 2 und nach einem der Ansprüche 6 oder 7,
**dadurch gekennzeichnet, dass** in Verfahrensschritt C anhand der Referenzwerte als Zustandsgröße ein Verschleißzustand des Reluktanzmotors ermittelt wird.

9. Verfahren nach einem der voranstehenden Ansprüche,
**dadurch gekennzeichnet, dass** in Verfahrensschritt C als Zustandsgröße ein Außer-Tritt-Fallen des Reluktanzmotors (1), ermittelt wird, insbesondere, dass das Außer-Tritt-Fallen anhand von Extrema (Ma1, Mi1, Ma2, Mi2) der Kennlinien ermittelt wird, und bevorzugt, dass das Außer-Tritt-Fallen anhand einer Anzahl und/oder einer Lage der Extrema (Ma1, Mi1, Ma2, Mi2) auf den Kennlinien ermittelt wird.

10. Verfahren nach Anspruch 6,
**dadurch gekennzeichnet, dass** in Verfahrensschritt B während der Strang unbestromt ist eine Messspannung angelegt wird, mittels derer die Stromstärke *I* im Strang gemessen wird und der erste Datensatz mit zumindest einem Werte-Tupel erstellt wird, wobei das zumindest eine Werte-Tupel zumindest die Stromstärke *I* umfasst.

11. Verfahren nach Anspruch 10,
**dadurch gekennzeichnet, dass** in Verfahrensschritt C als Zustandsgröße eine Temperatur durch Vergleichen von zumindest einem Werte-Tupel des ersten Datensatzes mit zumindest einem Werte-Tupel des zweiten Datensatzes berechnet wird, wobei das Werte-Tupel des zweiten Datensatzes einen Referenzwert der Stromstärke *I* umfasst.

12. Verfahren nach einem der voranstehenden Ansprüche,
**dadurch gekennzeichnet, dass** in Verfahrensschritt B die Stromstärke *I* und Spannungen mehrerer Strangwicklungen (7) parallelgeschaltet oder seriell geschaltet gemessen werden.

13. Verfahren nach einem der voranstehenden Ansprüche,
**dadurch gekennzeichnet, dass** in Verfahrensschritt B die Stromstärke *I* und Spannung mehrerer Strangwicklungen (7) parallelgeschaltet und unabhängig voneinander gemessen werden.

14. Verfahren nach einem der Ansprüche 2 bis 13,
**dadurch gekennzeichnet, dass** der Reluktanzmotors (1) Permanentmagnete (10) aufweist, welche bevorzugt am Stator (2) oder am Rotor (3) angeordnet sind, und deren magnetische Wirkung insbesondere als ein Offset des verketteten magnetischen Flusses *Ψ* bei der Ermittlung der ersten Kennlinie *Ψ(I)* und bei der Ermittlung der zweiten Kennlinie *Ψ(I)* berücksichtigt wird.

15. Fluidsystemkomponente (11), insbesondere eine Wechselarmatur oder eine Pumpe oder ein Ventil, mit einem Reluktanzmotor (1), welcher einen Rotor (3) und einen Stator (2) aufweist, wobei der Stator (2) mehrere Statorzähne (5) aufweist, die jeweils von zumindest einer Strangwicklung (7) eines Strangs umwickelt sind und wobei der Rotor (3) mehrere Rotorzähne (6) aufweist, mit einer Auswerteeinheit (4),
**dadurch gekennzeichnet, dass** der Reluktanzmotor (1) Mittel zum Messen zumindest einer Stromstärke *I* und/oder Ermitteln zumindest einer induzierten Spannung *U*_{L} der Strangwicklung umfasst, sowie dass der Reluktanzmotor (1) ausgebildet und die Auswerteeinheit (4) eingerichtet ist, das Verfahren nach einem der vorangegangenen Ansprüche durchzuführen.
